# EUROPEAN PATENT APPLICATION

(11) **EP 0 818 520 A2**
(43) Date of publication of application: **14.01.1998**
(21) Application number: 97109004.8
(22) Date of filing: 04.06.1997
(51) Int. Cl.: C09J 5/04

(54) **Method for manufacturing bonded structure**

(30) Priority: 06.06.1996 JP 166842/96
(71) Applicant: Dow Corning Toray Silicone Co., Ltd., Chuo-ku, Tokyo (JP)
(72) Inventor: Nakata, Toshiki, Dow Corning Toray, Ichihara-shi, Chiba Prefecture (JP); Onishi, Masayuki, Dow Corning Toray, Ichihara-shi, Chiba Prefecture (JP)
(74) Representative: Fleischer, Holm Herbert, Dr.

(57) **Abstract**

The invention is a method for producing a bonded structure comprising steps of: (I) coating a first substrate with a composition (I) selected from the group consisting of: (A) an organopolysiloxane having at least two alkoxy groups bonded to silicon atoms in each molecule, (B) an organopolysiloxane having at least two alkenyl groups bonded to silicon atoms in each molecule, and mixtures of (A) and (B), and (C) an organopolysiloxane having at least two hydrogen atoms bonded to silicon atoms in each molecule; (II) coating a second substrate, wherein said second substrate is the same or different type as said first substrate, with a compostion (II) comprising (D) a hydrosilylation catalyst and (E) at least one condensation catalyst selected from the group consisting of titanium, zirconium and aluminum, and wherein said composition (II) optionally includes component (B), with the proviso that compostion (II) must include component B if composition (I) does not include component B; (III) combining substrate (I) and substrate (II) to form said bonded structure.

## Description

The present invention is a method for manufacturing a bonded structure consisting of the same or different types. More specifically it concerns a method in which a bonded structure is efficiently manufactured by using a cured silicone product.

### Background of the Invention

Previous methods of manufacturing a bonded structure using a cured silicone product include following three types. In the first method, a condensation reaction type or addition reaction type curable silicone composition is applied as a coating to the surface of one of the substrates, after which the other substrate (which is of the same type as the first substrate or of a different type from said first substrate) is caused to adhere tightly to the aforementioned composition, and a cured silicone product is formed. In the second method, a hydrosilylation reaction catalyst is applied as a coating to the surface of one substrate, after which a silicone composition (which is cured by an addition reaction with the aforementioned hydrosilylation reaction catalyst) applied as a coating to the other substrate (which is of the same type as the first substrate or of a different type from said first substrate) is caused to adhere tightly so a cured silicone product is formed (see Japanese Patent Application Kokai No. 58-174481). In the third method, the surface of one substrate is coated with an organopolysiloxane which has at least two hydrogen atoms bonded to silicon atoms in each molecule, and the surface of the other substrate (which is of the same type as the first substrate or of a different type from said first substrate) is coated with a silicone composition consisting of at least [a] an organopolysiloxane which has at least two alkenyl groups bonded to silicon atoms in each molecule, and [b] a hydrosilylation reaction catalyst, after which the organopolysiloxane and silicon composition applied to the surfaces of the aforementioned substrates are caused to adhere tightly to each other so that a cured silicone product is formed (see Japanese Patent Application Kokai No. 6-336576).

However, although substrates consisting of organic materials with a poor heat resistance can be favorably bonded by means of a cured silicone product in cases where a condensation reaction type curable silicon composition is used (since condensation reaction type curable silicone compositions can be favorably bonded to various types of substrates at room temperature), the curing in this case proceeds from portions that are in contact with moisture in the air, so that a long time is required in order to achieve sufficient curing of the interior portions of the composition. As a result, bonded structures consisting of substrates of the same or different types cannot be efficiently manufactured.

On the other hand, in the case of addition reaction type curable silicone compositions, the curing time is short, so that even the interior portions of the composition can be cured in a short time. However, such compositions tend to be susceptible to interference with the curing reaction; in cases where bonded structures consisting of substrates of the same or different types are to be manufactured using such compositions, these substrates must be cleaned beforehand, and since the adhesive properties are generally poor, the types of substrates that can be used are limited, and it may be necessary to treat the substrates beforehand with a primer. Thus, bonded structures consisting of such substrates cannot be manufactured efficiently. In addition, although curing also proceeds at room temperature in the case of curable silicone compositions of this type, it is desirable to heat the compositions in order to obtain good adhesion. Accordingly, in cases where organic substrates with poor heat resistance are bonded by means of such a cured silicone product, deformation of the substrates or a drop in adhesion may occur.

The present inventors have conducted diligent research in order to solve the abovementioned problems. This research lead to the perfection of the present invention.

Specifically, the object of the present invention is to provide a method which allows the efficient manufacture of a bonded structure consisting of substrates of the same or different types by bonding said substrates in a favorable manner using a cured silicone product.

The present invention refers to a method for producing a bonded structure comprising steps of:
(I) coating a first substrate with a composition (I) comprising
   (A) an organopolysiloxane which has at least two alkoxy groups bonded to silicon atoms in each molecule, and optionally
   (B) an organopolysiloxane which has at least two alkenyl groups bonded to silicon atoms in each molecule, and
   (C) an organopolysiloxane which has at least two hydrogen atoms bonded to silicon atoms in each molecule,
(II) coating a second substrate with a composition (II), wherein said second substrate is the same or different type as the first substrate, and composition (II) comprises
   (D) a hydrosilylation catalyst and
   (E) at least one metal-containing condensation reaction catalyst containing a metal selected from the group consisting of titanium, zirconium and aluminum, and wherein said composition (II) optionally includes component (B), with the proviso that composition (II) must include component (B) if composition (I) does not include component (B),
(III) combining substrate (I) and substrate (II) to form a cured silicone product.

Figure 1 is a perspective view of a test specimen used to measure the tensile shear bonding strength of bonded structures in practical examples of the present invention.

In the manufacturing method of the present invention, there are no restrictions on the substrate materials that can be bonded by means of the aforementioned cured silicone product. Various types of substrate materials that are widely used in the electrical and electronics industries, the business machine industry, construction and civil engineering, etc., may be employed. Examples of such substrate materials include non-metallic inorganic substrate materials such as glass, ceramics, porcelain, mortar, concrete and slate, etc., metallic inorganic substrate materials such as copper, aluminum, iron and stainless steel, etc., and organic substrate materials such as polycarbonate resins (PC resins), polyallylate resins (PAR resins), polystyrene resins, polyester resins, polybutylene resins, acrylic resins, methacrylic resins, phenol resins, epoxy resins, polybutylene terephthalate resins (PBT resins), polyphenylene oxide resins (PPS resins), polyamide resins, acrylonitrile-butadiene-styrene copolymer resins (ABS resins), polyimide resins, natural rubber, synthetic rubbers and silicone rubbers, etc.

In the manufacturing method of the present invention, the surface of a substrate consisting of one of the abovementioned materials is first coated with the aforementioned composition (I). There are no restrictions on the coating method used in this case, as long as the method used is a method which is capable of coating the substrate with composition (I). Examples of coating methods which can be used include brush coating methods, spray coating methods, spin coating methods, calendering methods and knife coating methods. It is desirable that the thickness of the coating of composition (I) that is applied to the substrate be 1 to 1,000 µm.

The composition (I) is characterized by the fact that said composition consists of at least (A) an organopolysiloxane which has at least two alkoxy groups bonded to silicon atoms in each molecule, or a mixture of said component (A) with (B) an organopolysiloxane which has at least two alkenyl groups bonded to silicon atoms in each molecule, and (C) an organopolysiloxane which has at least two hydrogen atoms bonded to silicon atoms in each molecule.

The organopolysiloxane of the abovementioned component (A) has at least two alkoxy groups bonded to silicon atoms in each molecule; the reason for this is that if the number of such alkoxy groups is less than two per molecule, curing may be insufficient, or the adhesive properties of the cured silicone product may drop. The molecular structure of this component (A) may be a linear structure, a linear structure with some branching, a branched structure, a cyclic structure or a resin-form structure. In particular, a linear structure is especially desirable. Examples of the aforementioned alkoxy groups bonded to silicon atoms in this component (A) include methoxy groups, ethoxy groups, propoxy groups and butoxy groups. In particular, methoxy groups are especially desirable. The bonding positions of these alkoxy groups may be on the ends of the molecular chains and/or on side chains of the molecular chains. The ends of the molecular chains are especially desirable as bonding positions, since such positions offer good reactivity. These alkoxy groups may be bonded to silicon atoms in the principal chains, or may be bonded to silicon atoms which are in turn bonded to silicon atoms in the principal chains via alkylene groups. Furthermore, examples of groups other than alkoxy groups which can be bonded to silicon atoms in this component (A) include various substituted or unsubstituted monovalent hydrocarbon groups, e. g., alkyl groups such as methyl groups, ethyl groups, propyl groups, butyl groups, pentyl groups, hexyl groups, heptyl groups, octyl groups, nonyl groups, decyl groups and octadecyl groups, etc., cycloalkyl groups such as cyclopentyl groups and cyclohexyl groups, etc., aryl groups such as phenyl groups, tolyl groups, xylyl groups and naphthyl groups, etc., aralkyl groups such as benzyl groups, phenethyl groups and phenylpropyl groups, etc., and halogenated alkyl groups such as 3-chloropropyl groups and 3,3,3-trifluoropropyl groups, etc. In particular, methyl groups and phenyl groups are especially desirable. It is desirable that the viscosity of this component (A) be 20 to 1,000,000 mPa.s at 25°C, with a vlscosity of 100 to 500,000 mPa.s being especially desirable. If the viscosity at 25°C is less than 20 mPa.s, there is a danger of deterioration in the physical properties of the cured silicone product that is obtained. On the other hand, in cases where the viscosity at 25°C exceeds 1,000,000 mPa.s, there is a danger that it will be impossible to apply composition (I) to the surface of the substrate.

It is desirable that the component (A) be an organopolysiloxane which can be expressed by the following general formula: 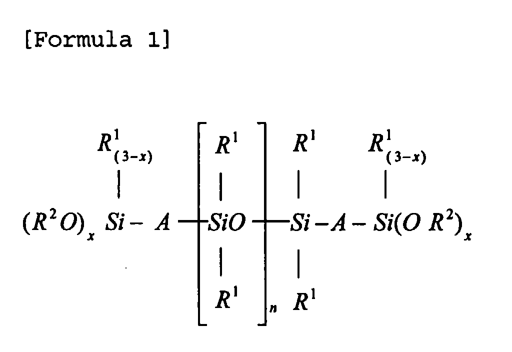 In the above formula, R¹ indicates substituted or unsubstituted monovalent hydrocarbon groups which may be the same or different. Examples of such groups are the same as described above; in particular, methyl groups and phenyl groups are especially desirable. Furthermore, R² in the above formula indicates alkyl groups; examples of such groups include methyl groups, ethyl groups, propyl groups and butyl groups, with methyl groups being especially desirable. Furthermore, A in the above formula indicates oxygen atoms or alkylene groups; examples of such alkylene groups include ethylene groups, propylene groups and butylene groups, with ethylene groups and butylene groups being especially desirable. Furthermore, x in the above formula is 2 or 3, with 3 being especially desirable. Moreover, n in the above formula is a positive number, preferably a positive number which is such that the viscosity of this organopolysiloxane at 25°C is 20 to 1,000,000 mPa.s (preferably 100 to 500,000 mPa.s).

Examples of the abovementioned component (A) include dimethylpolysiloxanes capped by trimethoxysiloxy groups at both ends of the molecular chains, dimethylpolysiloxanes capped by methyldimethoxysiloxy groups at both ends of the molecular chains, dimethylpolysiloxanes capped by trimethoxysilylethyldimethylsiloxy groups at both ends of the molecular chains, organopolysiloxanes in which some of the methyl groups of such dimethylpolysiloxanes are replaced by other alkyl groups, phenyl groups or 3,3,3-trifluoropropyl groups, and mixtures consisting of two or more different types of such organopolysiloxanes.

The organopolysiloxane of the abovementioned component (B) is not an essential component of composition (I), but must be present in either component (I) or component (II). In cases where this organopolysiloxane is mixed with composition (I), said organopolysiloxane is used in combination with the abovementioned component (A). The organopolysiloxane of this component (B) has at least two alkenyl groups bonded to silicon atoms in each molecule. The reason for this is that in cases where the number of such alkenyl groups is less than two groups per molecule, sufficient curing cannot be achieved. The molecular structure of this component (B) may be a linear structure, a linear structure with some branching, a branched structure, a cyclic structure or a resin-form structure. Examples of alkenyl groups which can be bonded to silicon atoms in this component (B) include vinyl groups, allyl groups, butenyl groups, pentenyl groups and hexenyl groups, with vinyl groups being especially desirable. The bonding positions of these alkenyl groups may be located at the ends of the molecular chains and/or on side chains of the molecular chains, with the ends of the molecular chains being especially desirable as bonding positions due to good reactivity. Furthermore, examples of groups other than alkenyl groups which can be bonded to silicon atoms in the aforementioned component (B) include various substituted or unsubstituted monovalent hydrocarbon groups, e. g., alkyl groups such as methyl groups, ethyl groups, propyl groups, butyl groups, pentyl groups, hexyl groups, heptyl groups, octyl groups, nonyl groups, decyl groups and octadecyl groups, etc., cycloalkyl groups such as cyclopentyl groups and cyclohexyl groups, etc., aryl groups such as phenyl groups, tolyl groups, xylyl groups and naphthyl groups, etc., aralkyl groups such as benzyl groups, phenethyl groups and phenylpropyl groups, etc., and halogenated alkyl groups such as 3-chloropropyl groups and 3,3,3-trifluoropropyl groups, etc. In particular, methyl groups and phenyl groups are especially desirable. It is desirable that the viscosity of this component (B) be 20 to 1,000,000 mPa.s at 25°C, with a viscosity of 100 to 500,000 mPa.s being especially desirable. The reasons for this are as follows: i. e., if the viscosity at 25°C is less than 20 mPa.s, there is a danger of deterioration in the physical properties of the cured silicone product that is obtained; on the other hand, in cases where the viscosity at 25°C exceeds 1,000,000 mPa.s, there is a danger that it will be impossible to apply composition (I) or composition (II) to the surface of the substrate.

Examples of the abovementioned component (B) include dimethylpolysiloxanes capped by dimethylvinylsiloxy groups at both ends of the molecular chains, dimethylsiloxane-methylvinylsiloxane copolymers capped by dimethylvinylsiloxy groups at both ends of the molecular chains, polymethylvinylsiloxanes capped by trimethylsiloxy groups at both ends of the molecular chains, dimethylsiloxane-methylvinylsiloxane copolymers capped by trimethylsiloxy groups at both ends of the molecular chains, organopolysiloxanes consisting of (CH₂=CH)(CH₃)₂SiO_{1/2} units and SiO_{4/2} units, organopolysiloxanes consisting of (CH₃)₃SiO_{1/2} units, (CH₂=CH)(CH₃)₂SiO_{1/2} units and SiO_{4/2} units, organopolysiloxanes consisting of (CH₃)₃SiO_{1/2} units, (CH₂=CH)(CH₃)₂SiO_{1/2} units, (CH₃)₂SiO_{2/2} and SiO_{4/2} units, organopolysiloxanes in which some of the methyl groups of the abovementioned organopolysiloxanes are replaced by other alkyl groups, phenyl groups or 3,3,3-trifluoropropyl groups, and mixtures consisting of two or more different types of such organopolysiloxanes.

The organopolysiloxane of the abovementioned component (C) has at least two hydrogen atoms bonded to silicon atoms in each molecule. The reason for this is that if the number of hydrogen atoms bonded to silicon atoms in this component is less than two hydrogen atoms per molecule, sufficient curing cannot be achieved. The molecular structure of this component (C) may be a linear structure, a linear structure with some branching, a branched structure, a cyclic structure or a resin-form structure. The bonding positions of the aforementioned hydrogen atoms bonded to silicon atoms may be located at the ends of the molecular chains and/or on side chains of the molecular chains. Furthermore, examples of groups other than hydrogen atoms which can be bonded to silicon atoms in the abovementioned component (C) include various substituted or unsubstituted monovalent hydrocarbon groups, e. g., alkyl groups such as methyl groups, ethyl groups, propyl groups, butyl groups, pentyl groups, hexyl groups, heptyl groups, octyl groups, nonyl groups, decyl groups and octadecyl groups, etc., cycloalkyl groups such as cyclopentyl groups and cyclohexyl groups, etc., aryl groups such as phenyl groups, tolyl groups, xylyl groups and naphthyl groups, etc., aralkyl groups such as benzyl groups, phenethyl groups and phenylpropyl groups, etc., and halogenated alkyl groups such as 3-chloropropyl groups and 3,3,3-trifluoropropyl groups, etc. In particular, methyl groups and phenyl groups are especially desirable. Furthermore, it is desirable that the viscosity of this component (C) be 1 to 10,000 mPa.s at 25°C. Examples of such a component (C) include methylhydrogenpolysiloxanes capped by trimethylsiloxy groups at both ends of the molecular chains, dimethylsiloxane-methylhydrogensiloxane copolymers capped by trimethylsiloxy groups at both ends of the molecular chains, dimethylpolysiloxanes capped by dimethylhydrogensiloxy groups at both ends of the molecular chains, dimethylsiloxane-methylhydrogensiloxane copolymers capped by dimethylhydrogensiloxy groups at both ends of the molecular chains, polyorganosiloxanes consisting of (CH₃)₂HSiO_{1/2} units and SiO_{4/2} units, organopolysiloxanes consisting of (CH₃)₃SiO_{1/2} units, (CH₃)₂HSiO_{1/2} units and SiO_{4/2} units, organopolysiloxanes consisting of (CH₃)₃SiO_{1/2} units, (CH₃)₂HSiO_{1/2} units, (CH₃)₂SiO_{2/2} and SiO_{4/2} units, organopolysiloxanes in which some of the methyl groups of the abovementioned organopolysiloxanes are replaced by other alkyl groups, phenyl groups or 3,3,3-trifluoropropyl groups, and mixtures consisting of

Next, in the bonding method of the present invention, composition (II) is applied as a coating to the surface of another substrate which is of the same type as the abovementioned first substrate or which is of a different type from said first substrate. There are no restrictions on the coating method used in this case, as long as the method used is a method which is capable of coating the substrate with composition (II).
Examples of coating methods which can be used include methods similar to those used to apply the abovementioned composition (I) to the first substrate.
As in the case of composition (I), it is desirable that the thickness of the coating of composition (II) that is applied to the substrate be 1 to 1,000 µm. This composition (II) is characterized by the fact that said composition consists of at least (D) a hydrosilylation catalyst and (E) at least one metal type condensation reaction catalyst comprising a metal selected from a set consisting of titanium, zirconium and aluminum, or consists of at least component (D), component (E) and component (B).

The hydrosilylation reaction catalyst of this component (D) is a catalyst which is used to promote an addition reaction between the alkenyl groups bonded to silicon atoms in component (B) and the hydrogen atoms bonded to silicon atoms in component (C). Examples of such a component (D) include platinum type catalysts such as platinum black, platinum supported on active carbon, platinum supported on finely powdered silica, chloroplatinic acid, alcohol solutions of chloroplatinic acid, olefin complexes of platinum and alkenylsiloxane complexes of platinum, etc., as well as rhodium type catalysts, palladium type catalysts and fine particles of thermoplastic resins containing such catalysts. Examples of thermoplastic resins which can be used in this case include silicone resins, polycarbonate resins, acrylic resins, nylon resins and polyester resins. Furthermore, it is desirable that the softening point of such thermoplastic resins be 5 to 200°C. Moreover, it is desirable that the particle size of the aforementioned fine particles of such thermoplastic resins be in the range of 0.01 to 10 µm.

The abovementioned component (E) consists of at least one type of metall-containing condensation reaction catalyst comprising a metal selected from a set of metals consisting of titanium, zirconium and aluminum. Such catalysts are used to promote a condensation reaction of the alkoxy groups bonded to silicon atoms in component (A). Examples of this component (E) include titanium type condensation reaction catalysts, e. g., organic titanic acid esters such as tetrabutyl titanate and tetraisopropyl titanate, etc., or organic titanium chelate compounds such as diisopropoxybis(acetylacetato)titanium and diisopropoxybis(ethylacetoacetato)titanium, etc.; zirconium type condensation reaction catalysts, e. g., organic zirconium esters such as zirconium tetrapropylate and zirconium tetrabutyrate, etc., or organic zirconium chelate compounds such as zirconium diacetate, zirconium tetra(acetylacetonate), tributoxyzirconium acetylacetonate, dibutoxyzirconium bis (acetylacetonate), tributoxyzirconium acetoacetate and dibutoxyzirconium acetylacetonato(ethylacetoacetate), etc.; and aluminum type condensation reaction catalysts, e. g., organic aluminum esters such as aluminum triethylate, aluminum triisopropylate, aluminum tri(sec-butyrate) and mono(sec-butoxy)aluminum diisopropylate, etc., or organic aluminum chelate compounds such as diisopropoxyaluminum (ethylacetoacetate), aluminum tris(ethylacetoacetate), aluminum bis(ethylacetoacetato) monoacetylacetonate and aluminum tris(acetylacetonate), etc.

The organopolysiloxane of this component (B) is not an essential component of composition (II), but is an essential component in the manufacturing method of the present invention. In cases where the abovementioned composition (I) contains component (B), component (B) is an optional component in composition (II); in cases where the abovementioned composition (I) does not contain component (B), composition (II) must contain said component (B). Examples of component (B) which can be included in this composition (II) include the same organopolysiloxanes as those described above. Furthermore, component (B) used in the abovementioned composition (I) and component (B) used in composition (II) may be the same or different components.

Furthermore, alkoxysilanes or partially hydrolyzed condensates of the same, inorganic fillers, addition reaction inhibiting agents, non-reactive organopolysiloxanes, organic solvents, flame retarding agents, heat resistance enhancing agents, plasticizers, thixotropic agents, bonding promoters and anti-mold agents, etc., may be added as optional components to the abovementioned composition (I) and composition (II) used in the manufacturing method of the present invention.

It is desirable that the abovementioned alkoxysilanes be alkoxysilanes expressed by the following general formula:

R³ₐSi(OR⁴)₍₄₋ₐ₎

In the above formula, R³ indicates at least one type of group selected from a set consisting of monovalent hydrocarbon groups, epoxy-functional organic groups and acrylic-functional organic groups. Examples of monovalent hydrocarbon groups which can be used include various substituted or unsubstituted monovalent hydrocarbon groups, e. g., alkyl groups such as methyl groups, ethyl groups, propyl groups, butyl groups, pentyl groups, hexyl groups, heptyl groups, octyl groups, nonyl groups, decyl groups and octadecyl groups, etc., cycloalkyl groups such as cyclopentyl groups and cyclohexyl groups, etc., alkenyl groups such as vinyl groups and allyl groups, etc., aryl groups such as phenyl groups, tolyl groups, xylyl groups and naphthyl groups, etc., aralkyl groups such as benzyl groups, phenethyl groups and phenylpropyl groups, etc., and halogenated alkyl groups such as 3-chloropropyl groups and 3,3,3-trifluoropropyl groups, etc. Examples of the abovementioned epoxy-functional organic groups which can be used include oxiranylalkyl groups such as 4-oxiranylbutyl groups or 8-oxiranyloctyl groups, etc., glycidoxyalkyl groups such as 3-glycidoxypropyl groups or 4-glycidoxybutyl groups, etc., and 2-(3,4-epoxycyclohexyl)vinyl groups. Furthermore, examples of the abovementioned acrylic-functional organic groups include methacryloxypropyl groups and methacryloxybutyl groups. Furthermore, in the above formula, R⁴ indicates an alkyl group or an alkoxyalkyl group. Examples of groups which can be used include alkyl groups such as methyl groups, ethyl groups, propyl groups, butyl groups, pentyl groups, hexyl groups, heptyl groups, octyl groups, nonyl groups, decyl groups and octadecyl groups, etc., and alkoxyalkyl groups such as methoxyethyl groups, ethoxyethyl groups, methoxypropyl groups and methoxybutyl groups, etc. Methoxy groups are especially desirable. Furthermore, in the above formula, a is 0, 1 or 2, and is preferably 1. Examples of such alkoxysilanes (or partially hydrolyzed condensates of the same) include alkoxysilanes such as tetramethoxysilane, tetraethoxysilane, methylcellosolve ortho-silicate, methyltrimethoxysilane, methyltriethoxysilane, ethyltrimethoxysilane, vinyltrimethoxysilane, phenyltrimethoxysilane, methyltrimethoxyethoxysilane, dimethyldimethoxysilane and diphenyldimethoxysilane, etc.; epoxy-functional alkoxysilanes such as 4-oxiranylbutyltrimethoxysilane, 8-oxiranyloctyltrimethoxysilane, 3-glycidoxypropyltrimethoxysilane and 2-(3,4-epoxycyclohexyl)ethyltrimethoxysilane, etc.; and acrylic-functional alkoxysilanes such as 3-methacryloxypropyltrimethoxysilane and 4-methcryloxybutyltrimethoxysilane, etc.; as well as partially hydrolyzed condensates of such alkoxysilanes and mixtures of two or more different types of such alkoxysilanes or partially hydrolyzed condensates of alkoxysilanes.

Furthermore, the abovementioned addition reaction inhibiting agents are agents that are used in order to adjust the curing time; examples of such agents include acetylene type compounds such as 3-methyl-1-butyn-3-ol, 3,5-dimethyl-1-hexyn-3-ol and 3-phenyl-2-butyn-3-ol, etc.; "enyne" compounds such as 3-methyl-3-penten-1-yne and 3,5-dimethyl-3-hexen-1-yne, etc.; cycloalkenylsiloxanes such as 1,3,5,7-tetramethyl-1,3,5,7-tetravinylcyclotetrasiloxane and 1,3,5,7-tetramethyl-1,3,5,7-tetrahexenylcyclotetrasiloxane, etc.; and triazole compounds such as benzotriazole, etc.

Furthermore, the abovementioned inorganic fillers are components that are used in order to improve the physical characteristics of the cured silicone product that is obtained. Examples of such fillers include inorganic fillers such as finely powdered dry-process silica, finely powdered wet-process silica, finely powdered quartz, finely powdered calcium carbonate, finely powdered titanium dioxide, finely powdered diatomaceous earth, finely powdered aluminum oxide, finely powdered zinc oxide or finely powdered zinc carbonate, etc., and inorganic fillers prepared by surface-treating the abovementioned inorganic fillers with organoalkoxysilanes such as methyltrimethoxysilane, etc., organohalosilanes such as trimethylchlorosilane, etc., organosilanes such as hexamethyldisilazane, etc., or siloxane oligomers such as dimethylsiloxane oligomers capped by hydroxy groups at both ends of the molecular chains, methylphenylsiloxane oligomers capped by hydroxy groups at both ends of the molecular chains, or methylvinylsiloxane oligomers capped by hydroxy groups at both ends of the molecular chains, etc.

Furthermore, the abovementioned non-reactive organopolysiloxanes are components that are used in order to improve the physical characteristics of the cured silicone product obtained. Examples of such non-reactive organopolysiloxanes include polymethylsiloxanes which are capped by trimethylsiloxy groups at both ends of the molecular chains, and polymethylphenylsiloxanes which are capped by trimethylsiloxy groups at both ends of the molecular chains.

In the manufacturing method of the present invention, a cured silicone product is formed by causing the abovementioned composition (I) and composition (II) applied to the surfaces of the abovementioned substrates to adhere tightly to each other. The curing reactions involved in this case are a condensation reaction and an addition reaction; these reactions will proceed even at room temperature, but are accelerated by heating. Furthermore, substrates may also be pressed together in order to insure sufficiently tight adhesion between the aforementioned composition (I) and composition (II) applied to the surfaces of the substrates. The cured silicone product thus formed may be a gel-form product, a rubber-form product or a resin-form product. A rubber-form product is especially desirable. Here, in order to obtain a cured silicon product with a rubber-form structure, it is desirable that at least one of the two components (A) and (B) have a linear molecular structure.

In the manufacturing method of the present invention, there are no particular restrictions on the amounts of components (A), (B) and (C) that are mixed in composition (I), or on the amounts of components (D), (E) and (B) that are mixed in composition (II). However, it is desirable that these amounts be such that component (A) and component (B) in the curable silicone composition obtained by causing these compositions to adhere tightly to each other have a weight ratio in the range of 10 : 90 to 90 : 10. Furthermore, in this curable silicone composition, it is desirable that the amount of component (C) contained in said composition be such that the quantity of hydrogen atoms bonded to silicon atoms in component (C) is 0.01 to 50 moles per mole of alkenyl groups bonded to silicon atoms in component (B). Moreover, in this curable silicone composition, it is desirable that the amount of component (D) be sufficient to cause curing of said curable silicone composition, and in cases where a platinum type catalyst is used as component (D), it is desirable that the quantity of platinum metal in component (D) be such that the concentration of platinum (in weight units) relative to the composition is 0.01 ppm or greater. Furthermore, in this curable silicone composition, it is desirable that the amount of component (E) be sufficient to cause curing of the composition, and that said amount be in the range of 0.001 to 50 parts by weight per 100 parts by weight of the total of component (A) and component (B).

By using the manufacturing method of the present invention, it is possible to bond substrates of, the same or different types in a favorable manner by means of a cured silicone product. For example, the method of the present invention can be applied to the bonding of glass plates to glass plates by means of a cured silicone product, the bonding of organic resin films or organic resin plates (consisting of polycarbonate resins or acrylic resins, etc.) to similar films or plates by means of a cured silicone product, the bonding of glass plates to organic resin films or organic resin plates by means of a cured silicone product, and the bonding of metals to metals by means of a cured silicone product. Accordingly, the method of the present invention can be used for the bonding of optical disks and lenses consisting of glass, acrylic resins or polycarbonate resins, etc., the bonding of IC packages and heat-dissipating plates in CPU's, etc., the bonding of polyethylene terephthalate resin films used in membrane switches (including the bonding of such films to substrates), and the bonding of base films and keys in computer keyboards, etc.

### Examples

The method of the present invention for manufacturing a bonded structure will be described in detail below in terms of practical examples of application. Furthermore, all viscosity values are values measured at 25°C.

### Example 1

50 parts by weight of a dimethylpolysiloxane capped by dimethylvinylsiloxy groups at both ends of the molecular chains (with a viscosity of 10,000 mPa.s), 50 parts by weight of a dimethylpolysiloxane capped by trimethoxysiloxy groups at both ends of the molecular chains (with a viscosity of 25,000 mPa.s) and 10 parts by weight of dry-process silica with a BET specific surface area of 200 m²/g which had been surface-treated with hexamethyldisilazane were uniformly mixed. Afterward, 1 part by weight of methyltrimethoxysilane and 1.5 parts by weight of a dimethylsiloxane-methylhydrogensiloxane copolymer capped by trimethylsiloxy groups at both ends of the molecular chains (with a viscosity of 5 mPa.s; molar ratio of dimethylsiloxane units to methylhydrogensiloxane units: 3 : 5) were uniformly mixed with the abovementioned mixture, thus producing an organopolysiloxane composition.

### Example 2

100 parts by weight of a dimethylpolysiloxane capped by dimethylvinylsiloxy groups at both ends of the molecular chains (with a viscosity of 10,000 mPa.s) and 10 parts by weight of dry-process silica with a BET specific surface area of 200 m²/g which had been surface-treated with hexamethyldisilazane were uniformly mixed. Afterward, an isopropyl alcohol solution of chloroplatinic acid (in which the amount of chloroplatinic acid added was set so that the platinum metal content was 0.01 wt % relative to the abovementioned dimethylpolysiloxane) and 0.2 parts by weight of diisopropoxybis(ethylacetoacetato)titanium were added and uniformly mixed, thus producing an organopolysiloxane composition.

### Example 3

1 part by weight of methyltrimethoxysilane and 9 parts by weight of a dimethylsiloxane-methylhydrogensiloxane copolymer capped by trimethylsiloxy groups at both ends of the molecular chains (with a viscosity of 5 mPa.s; molar ratio of dimethylsiloxane units to methylhydrogensiloxane units: 3 : 5) were uniformly mixed with 100 parts by weight of a dimethylpolysiloxane capped by trimethoxysiloxy groups at both ends of the molecular chains (with a viscosity of 25,000 mPa.s), thus producing an organopolysiloxane composition.

### Example 4

100 parts by weight of an organopolysiloxane mixture with a viscosity of 7,000 mPa.s consisting of 50 parts by of an organopolysiloxane copolymer consisting of SiO_{4/2} units, (CH₃)₃SiO_{1/2} units and (CH₃)₂(CH₂=CH)SiO_{1/2} units and 50 parts by weight of a dimethylpolysiloxane capped by dimethylvinylsiloxane groups at both ends of the molecular chains was uniformly mixed. Afterward, an isopropyl alcohol solution of chloroplatinic acid tin which the amount of chloroplatinic acid added was set so that the platinum metal content was 0.01 wt % relative to the abovementioned organopolysiloxane mixture) and 0.2 parts by weight of diisopropoxybis(ethylacetoacetato)titanium were added and uniformly mixed, thus producing an organopolysiloxane composition.

### Example 5

An organopolysiloxane mixture with a viscosity of 7,000 mPa.s consisting of 50 parts by of an organopolysiloxane copolymer consisting of SiO_{4/2} units, (CH₃)₃SiO_{1/2} units and (CH₃)₂(CH₂=CH)SiO_{1/2} units and 50 parts by weight of a dimethylpolysiloxane capped by dimethylvinylsiloxane groups at both ends of the molecular chains was prepared; an isopropyl alcohol solution of chloroplatinic acid (in which the amount of chloroplatinic acid added was set so that the platinum metal content was 0.01 wt % relative to the abovementioned organopolysiloxane mixture) and a solution prepared by dissolving 0.5 parts by weight of zirconium tetraacetylacetate in toluene were then mixed with the abovementioned mixture, thus producing an organopolysiloxane composition.

### Example 6

100 parts by weight of a dimethylpolysiloxane capped by dimethylvinylsiloxy groups at both ends of the molecular chains (with a viscosity of 10,000 mPa.s) and 10 parts by weight of dry-process silica with a BET specific surface area of 200 m²/g which had been surface-treated with hexamethyldisilazane were mixed. Afterward, an isopropyl alcohol solution of chloroplatinic acid (in which the amount of chloroplatinic acid added was set so that the platinum metal content was 0.01 wt % relative to the abovementioned dimethylpolysiloxane) was mixed with the abovementioned mixture, thus producing an organopolysiloxane composition.

### Example 7

100 parts by weight of a dimethylpolysiloxane capped by trimethoxysiloxy groups at both ends of the molecular chains (with a viscosity of 25,000 mPa.s) and 10 parts by weight of dry-process silica with a BET specific surface area of 200 m²/g which had been surface-treated with hexamethyldisilazane were mixed. Afterward, 1 part by weight of methyltrimethoxysilane and 0.2 parts by weight of diisopropoxybis(ethylacetoacetato)titanium were mixed with the abovementioned mixture, thus producing an organopolysiloxane composition.

### Example 8

A test piece was prepared by coating one side of a polycarbonate resin plate (length: 7.5 cm, width: 2.5 cm, thickness: 0.2 cm) with the organopolysiloxane composition prepared in Example 1 so that the resulting coating had an area of 2.5 cm x 25 cm and a thickness of 30 µm.

Furthermore, a second test piece was prepared by coating one side of another polycarbonate resin plate (length: 7.5 cm, width: 2.5 cm, thickness: 0.2 cm) with the organopolysiloxane composition prepared in Example 2 so that the resulting coating had an area of 2.5 cm x 25 cm and a thickness of 30µm.

Next, the coated surfaces of these test pieces were caused to adhere tightly to each other, and the test pieces were pressed together by means of clips and held in this state for 30 minutes at room temperature. As a result, a test specimen was obtained in which the abovementioned test pieces were bonded by means of a rubber-form cured silicone product.

When the tensile shear bonding strength of the abovementioned test specimen was measured by the tensile shear bonding strength test method for bonding agents specified in JIS K6850, a value of 6.5 kgf/cm² was obtained. Furthermore, when the test pieces were observed following this test, it was found that the rubber-form cured silicone product showed good adhesion to the polycarbonate resin plates, with said plates showing cohesive failure.

### Example 9

A test piece was prepared by coating one side of a polycarbonate resin plate (length: 7.5 cm, width: 2.5 cm, thickness: 0.2 cm) with the organopolysiloxane composition prepared in Example 3 so that the resulting coating had an area of 2.5 cm x 25 cm and a thickness of 30µm.

Furthermore, a second test piece was prepared by coating one side of another polycarbonate resin plate (length: 7.5 cm, width: 2.5 cm, thickness: 0.2 cm) with the organopolysiloxane composition prepared in Example 4 so that the resulting coating had an area of 2.5 cm x 25 cm and a thickness of 30µm.

Next, the coated surfaces of these test pieces were caused to adhere tightly to each other, and the test pieces were pressed together by means of clips and held in this state for 30 minutes at room temperature. As a result, a test specimen was obtained in which the abovementioned test pieces were bonded by means of a rubber-form cured silicone product.

When the tensile shear bonding strength of the abovementioned test specimen was measured by the tensile shear bonding strength test method for bonding agents specified in JIS K6850, a value of 5.2 kgf/cm² was obtained. Furthermore, when the test pieces were observed following this test, it was found that the rubber-form cured silicone product showed good adhesion to the polycarbonate resin plates, with said plates showing cohesive failure.

### Example 10

A test piece was prepared by coating one side of a polycarbonate resin plate (length: 7.5 cm, width: 2.5 cm, thickness: 0.2 cm) with the organopolysiloxane composition prepared in Example 3 so that the resulting coating had an area of 2.5 cm x 25 cm and a thickness of 30µm.

Furthermore, a second test piece was prepared by coating one side of another polycarbonate resin plate (length: 7.5 cm, width: 2.5 cm, thickness: 0.2 cm) with the organopolysiloxane composition prepared in Example 5 so that the resulting coating had an area of 2.5 cm x 25 cm and a thickness of 30µm.

Next, the coated surfaces of these test pieces were caused to adhere tightly to each other, and the test pieces were pressed together by means of clips and held in this state for 30 minutes at room temperature. As a result, a test specimen was obtained in which the abovementioned test pieces were bonded by means of a rubber-form cured silicone product.

When the tensile shear bonding strength of the abovementioned test specimen was measured by the tensile shear bonding strength test method for bonding agents specified in JIS K6850, a value of 4.4 kgf/cm² was obtained. Furthermore, when the test pieces were observed following this test, it was found that the rubber-form cured silicone product showed good adhesion to the polycarbonate resin plates, with said plates showing cohesive failure.

### Example 11

A test piece was prepared by coating one side of a polycarbonate resin plate (length: 7.5 cm, width: 2.5 cm, thickness: 0.2 cm) with the organopolysiloxane composition prepared in Example 1 so that the resulting coating had an area of 2.5 cm x 25 cm and a thickness of 180µm.

Furthermore, a second test piece was prepared by coating one side of another polycarbonate resin plate (length: 7.5 cm, width: 2.5 cm, thickness: 0.2 cm) with the organopolysiloxane composition prepared in Example 2 so that the resulting coating had an area of 2.5 cm x 25 cm and a thickness of 180µm.

Next, the coated surfaces of these test pieces were caused to adhere tightly to each other, and the test pieces were pressed together by means of clips and held in this state for 30 minutes at room temperature. As a result, a test specimen was obtained in which the abovementioned test pieces were bonded by means of a rubber-form cured silicone product.

When the tensile shear bonding strength of the abovementioned test specimen was measured by the tensile shear bonding strength test method for bonding agents specified in JIS K6850, a value of 3.7 kgf/cm² was obtained. Furthermore, when the test pieces were observed following this test, it was found that the rubber-form cured silicone product showed good adhesion to the polycarbonate resin plates, with said plates showing cohesive failure.

### Example 12

A test piece was prepared by coating one side of a polycarbonate resin plate (length: 7.5 cm, width: 2.5 cm, thickness: 0.2 cm) with the organopolysiloxane composition prepared in Example 1 so that the resulting coating had an area of 2.5 cm x 25 cm and a thickness of 30µm.

Furthermore, a second test piece was prepared by coating one side of another polycarbonate resin plate (length: 7.5 cm, width: 2.5 cm, thickness: 0.2 cm) with the organopolysiloxane composition prepared in Example 2 so that the resulting coating had an area of 2.5 cm x 25 cm and a thickness of 30µm.

Next, the coated surfaces of these test pieces were caused to adhere tightly to each other, and the test pieces were pressed together by means of clips and held in this state for 5 hours at 60°C. As a result, a test specimen was obtained in which the abovementioned test pieces were bonded by means of a rubber-form cured silicone product.

When the tensile shear bonding strength of the abovementioned test specimen was measured by the tensile shear bonding strength test method for bonding agents specified in JIS K6850, a value of 8.7 kgf/cm² was obtained. Furthermore, when the test pieces were observed following this test, it was found that the rubber-form cured silicone product showed good adhesion to the polycarbonate resin plates, with said plates showing cohesive failure.

### Example 13

A test piece was prepared by coating one side of a polycarbonate resin plate (length: 7.5 cm, width: 2.5 cm, thickness: 0.2 cm) with a dimethylsiloxane-methylhydrogensiloxane copolymer capped by trimethylsiloxy groups at both ends of the molecular chains (with a viscosity of 5 mPa.s; molar ratio of dimethylsiloxane units to methylhydrogensiloxane units: 3 : 5) so that the resulting coating had an area of 2.5 cm x 25 cm and a thickness of 30µm.

Furthermore, a second test piece was prepared by coating one side of another polycarbonate resin plate (length: 7.5 cm, width: 2.5 cm, thickness: 0.2 cm) with the organopolysiloxane composition prepared in Example 6 so that the resulting coating had an area of 2.5 cm x 25 cm and a thickness of 3oµm.

Next, the coated surfaces of these test pieces were caused to adhere tightly to each other, and the test pieces were pressed together by means of clips and held in this state for 30 minutes at room temperature. As a result, a test specimen was obtained in which the abovementioned test pieces were bonded by means of a rubber-form cured silicone product.

When the tensile shear bonding strength of the abovementioned test specimen was measured by the tensile shear bonding strength test method for bonding agents specified in JIS K6850, a value of 1.2 kgf/cm² was obtained. Furthermore, when the test pieces were observed following this test, it was found that the rubber-form cured silicone product showed complete interfacial peeling with respect to the polycarbonate resin plates.

### Example 14

A test piece was prepared by coating one side of a polycarbonate resin plate (length: 7.5 cm, width: 2.5 cm, thickness: 0.2 cm) with the organopolysiloxane composition prepared in Example 7 so that the resulting coating had an area of 2.5 cm x 25 cm and a thickness of 30µm.

One side of another polycarbonate resin plate (length: 7.5 cm, width: 2.5 cm, thickness: 0.2 cm) was caused to adhere tightly to the coated surface of the aforementioned test piece, and the two plates were pressed together by means of clips and held in this state for 30 minutes at room temperature. As a result, a test specimen was obtained in which the abovementioned test piece and polycarbonate resin plate were bonded by means of a rubber-form cured silicone product; however, the interior portions of this cured silicone product remained uncured.

When the tensile shear bonding strength of the abovementioned test specimen was measured by the tensile shear bonding strength test method for bonding agents specified in JIS K6850, a value of 0.1 kgf/cm² was obtained. Furthermore, when the test piece was observed following this test, it was found that although a portion of the cured silicone product was bonded to the polycarbonate resin plate, the interior portions of said cured silicone product remained uncured.

## Claims

1. A method for producing a bonded structure comprising steps of:
( I) coating a first substrate with a composition (I) comprising
(A) an organopolysiloxane which has at least two alkoxy groups bonded to silicon atoms in each molecule, and optionally
(B) an organopolysiloxane which has at least two alkenyl groups bonded to silicon atoms in each molecule, and
(C) an organopolysiloxane which has at least two hydrogen atoms bonded to silicon atoms In each molecule,
( II) coating a second substrate with a composition (II), wherein said second substrate is the same or different type as the first substrate, and composition (II) comprises
(D) a hydrosilylation catalyst and
(E) at least one metal-containing condensation reaction catalyst containing a metal selected from the group consisting of titanium, zirconium and aluminum, and wherein said composition (II) optionally includes component (B), with the proviso that composition (II) must include component (B) if composition (I) does not include component (B),
(III) combining substrate (I) and substrate (II) to form a cured silicone product.

2. The method of claim 1, wherein the combined thickness of composition (I) and composition (II) are 1 to 1,000 µm.

3. The bonded structure obtainable by the method of any of claims 1 or 2.
